# NOUVEAU FASCICULE DE BREVET EUROPEEN

(11) **EP 1 502 814 B2**
(45) Date de publication et mention de la décision concernant l'opposition: **23.02.2011**
(45) Mention de la délivrance du brevet: 25.10.2006
(21) Numéro de dépôt: 04291916.7
(22) Date de dépôt: 27.07.2004
(51) Int. Cl.: B60Q 1/14

(54) **Projecteur code et virage pour véhicule automobile**
Scheinwerfer für Abblend- und Kurvenlicht für Kraftfahrzeuge
Vehicle headlight with dipped beam light and cornering light

(30) Priorité: 01.08.2003 FR 0309565
(43) Date de publication de la demande: 02.02.2005
(73) Titulaire: VALEO VISION, 93012 Bobigny Cedex (FR)
(72) Inventeur: Ravier, Jean-Paul, 94100 Saint Maur (FR)
(74) Mandataire: Tran, Chi-Hai

(56) Documents cités:
- EP-A1- 1 500 553
- DE-A- 4 421 306
- DE-A1- 10 104 773
- DE-A1- 19 813 032
- DE-A1- 19 923 187
- FR-A- 2 776 366
- US-A- 5 404 278
- US-A1- 2002 015 308

## Description

L'invention est relative à un projecteur d'éclairage code et virage pour véhicule automobile.

D'une manière générale, dans un projecteur comportant une fonction code et une fonction virage, les systèmes optiques respectifs sont dissociés et nécessitent ainsi une surface frontale de projecteur importante. Cette exigence peut conduire à une limitation de l'application projecteur code et virage vers les gammes moyennes ou basses de véhicules car la surface allouée aux projecteurs, dans ces gammes de véhicules, est plus réduite que pour les véhicules haut de gamme. De plus, les contraintes économiques sont plus fortes pour les gammes moyennes ou basses de véhicules.

Le document FR-A- 2 776 366 décrit un projecteur avec une fonction virage et une fonction frontale, avec deux glaces et des moyens de déplacement pour faire pivoter le réflecteur entre deux positions.

L'invention a pour but, surtout, de fournir un projecteur lumineux code et virage qui soit d'un encombrement réduit et d'un coût acceptable pour équiper les gammes moyennes ou basses de véhicules.

Selon l'invention, un projecteur lumineux code et virage pour véhicule automobile est caractérisé selon la revendication 1. Ce projecteur comporte :
- au moins deux sources lumineuses avec au moins une première source à coupure , notamment à coupure de type code, par exemple en forme de V ou présentant un décrochement (la définition de la coupure est précisée dans les réglementations en vigueur, notamment américains, européennes et japonaises) et au moins une seconde source à coupure au moins partiellement plate, disposée à l'extérieur de la première source, pour éclairer vers l'intérieur d'un virage de son côté ;
- des moyens sensibles à la trajectoire du véhicule pour fournir un signal dépendant de la nature de la route suivie par le véhicule ;
- et des moyens pour augmenter l'intensité lumineuse de la source (ou d'au moins une des sources) à coupure plate, lors d'un virage du côté de cette (ces) source(s), en réponse au signal fourni.

De préférence, la ou les secondes sources (K1) sont à coupure entièrement plate ou plate jusqu'à un certain angle horizontal.

Avantageusement, on peut aussi distinguer les deux types de sources par le fait qu'elles ont des coupures différentes ; par exemple les premières en V et les secondes une coupure plate, mais cet exemple de réalisation n'est pas limitatif.

De préférence, plusieurs premières sources à coupure de type code notamment en V sont prévues avec leurs axes optiques parallèles et plusieurs secondes sources à coupure plate sont prévues avec leurs axes optiques inclinés vers l'extérieur par rapport à l'axe longitudinal du véhicule.

L'inclinaison des axes des sources à coupure plate peut être croissante vers l'extérieur.

Une progression du survoltage peut être prévue en partant de la seconde source la moins inclinée vers la seconde source la plus inclinée. Les sources lumineuses orientées vers l'extérieur du virage peuvent être sous voltées, en vue de maintenir la température du système de refroidissement des sources à un niveau moyen nominal.

Selon une autre possibilité, lors de l'allumage du projecteur, certaines seulement des sources à coupure plate, à savoir les plus proches des sources à coupure code, sont alimentées en permanence, tandis que les sources à coupure plate extrêmes ne sont allumées que pendant les phases virage.

L'invention a également pour objet un véhicule automobile équipé d'au moins un projecteur défini plus haut.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig.1 est un schéma en perspective d'une installation d'éclairage sur véhicule comprenant deux projecteurs lumineux code virage selon l'invention.
Fig.2 est une vue schématique en plan à plus grande échelle du projecteur lumineux situé sur le côté droit du véhicule, et
Fig.3 est une coupe verticale schématique d'un module à LED.

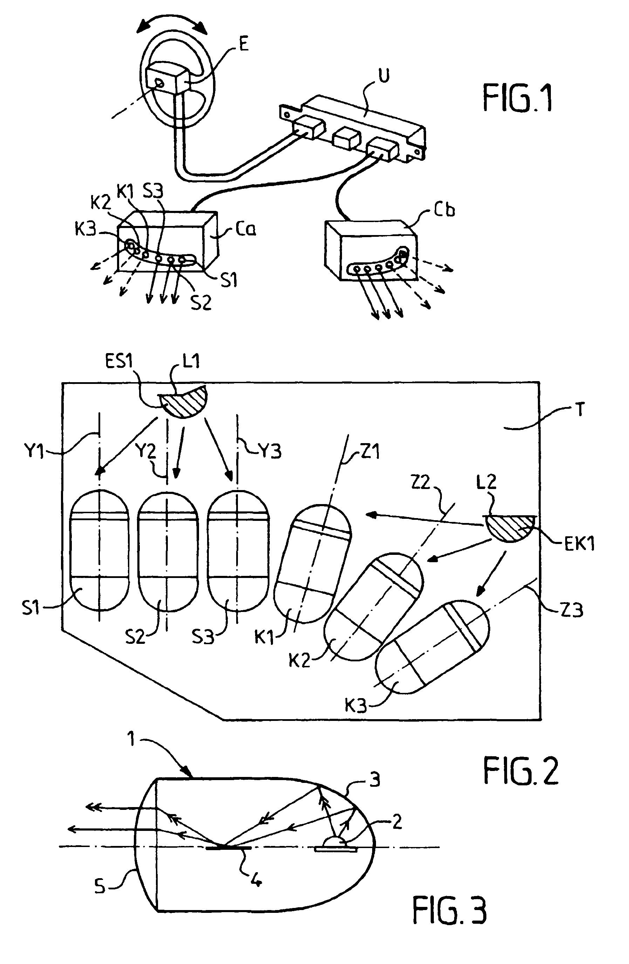

En se reportant à Fig.1 des dessins, on peut voir une partie d'installation d'éclairage, sur véhicule automobile, qui comporte de chaque côté, à l'avant du véhicule, un projecteur lumineux code virage Ca situé à droite et Cb situé à gauche. Chaque projecteur est relié par un câble multiconducteur à une unité de commande U.

Des moyens E sensibles à la trajectoire du véhicule comprennent un capteur de volant et fournissent à l'unité U un signal dépendant de la nature de la route suivie par le véhicule. Les moyens sensibles E pourraient comprendre une caméra ou un navigateur GPS en complément ou à la place du capteur de volant.

Chaque projecteur code virage Ca, Cb comporte au moins deux sources lumineuses S1, K1 avec au moins une première source S1 à coupure code en V et au moins une seconde source K1 à coupure plate disposée vers l'extérieur de la première source S1. La deuxième source K1 permet d'éclairer vers l'intérieur d'un virage de son côté.

Sur Fig.2, le projecteur droit Ca est tourné de 180° par rapport à Fig. 1 de sorte que la zone avant éclairée par le projecteur est située vers le haut. Les secteurs ES1 et EK1 représentent schématiquement les zones éclairées par les sources S1, K1 sur un écran vertical. La source S1 à coupure code éclaire essentiellement au-dessous d'une ligne de coupure L1 en V comportant, dans le cas d'un véhicule avec conduite à droite, un segment horizontal vers la gauche et un segment oblique montant vers la droite sous un angle d'environ 15° par rapport à l'horizontale. La zone éclairée se trouve au-dessous de cette ligne L1.

La source K1 à coupure plate éclaire essentiellement au-dessous d'une ligne horizontale L2.

De préférence, trois premières sources lumineuses S1, S2, S3 à coupure en V sont prévues avec leurs axes optiques Y1, Y2, Y3 parallèles entre eux et à l'axe longitudinal du véhicule. Trois secondes sources lumineuses à coupure plate K1, K2, K3 sont prévues, à l'extérieur des sources à coupure en V.

Les axes optiques Z1, Z2, Z3 des sources K1, K2, K3 sont inclinés vers l'extérieur par rapport à l'axe du véhicule. De préférence, l'inclinaison des axes Z1-Z3 augmente de la source K1, la plus proche de la source S3, vers la source extrême K3.

Les moyens de commande U sont prévus pour provoquer une augmentation de l'intensité lumineuse des sources K1-K3 à coupure plate lors d'un virage de leur côté, afin de mieux éclairer l'intérieur du virage.

L'augmentation de l'intensité lumineuse est effectuée en réponse au signal reçu des moyens E sensibles à la trajectoire.

Chaque source lumineuse est avantageusement constituée par un module 1 (Fig.3) à LED 2 (diode électroluminescente). Les sources lumineuses sont montées sur un support T, logé dans le boîtier du projecteur Ca, avec une possibilité de réglage de leur orientation. Le montage du projecteur Cb est similaire.

Comme visible sur Fig.3, chaque module 1 comporte un réflecteur 3 semi ellipsoïdal. Une LED 2 est située au foyer intérieur du réflecteur 3 et est orientée de manière que l'axe de son faisceau lumineux soit orthogonal à l'axe optique. Le faisceau renvoyé par le réflecteur 3 tombe sur une plaque 4 métallique réfléchissante, généralement appelée plieuse, qui peut être plane pour donner la coupure plate L2, ou pliée en forme de dièdre pour donner la coupure L1 en V. La plaque 4 est située au foyer externe du réflecteur 3 ou à son voisinage. Une lentille convergente 5 est placée en sortie du module 1. Les modules des sources K1-K3 à coupure plate peuvent être communs totalement ou en partie avec des modules utilisés pour une fonction virage à défilement. Selon une telle fonction virage, les modules sont allumés progressivement depuis le module intérieur vers le module extérieur pour un suivi du virage.

Différentes configurations sont possibles pour combiner les fonctions code normal et code virage.

Selon une première configuration, lorsque le projecteur est allumé, les premières sources S1-S3 à coupure code sont alimentées en permanence et seulement certaines des sources à coupure plate, par exemple la source K1 contiguë à la source S3, sont également alimentées en permanence, c'est-à-dire aussi bien en ligne droite que dans les virages ; les secondes sources extrêmes telles que K2,K3 ne sont alimentées que pendant les phases de virages situés de leur côté ( par exemple virage à droite pour les sources K2, K3 du projecteur droit).

Selon une deuxième configuration, lorsque le projecteur est allumé, toutes les sources lumineuses S1-S3 et K1-K3 sont alimentées en ligne droite, et lors d'un virage du côté du projecteur considéré, les secondes sources extrêmes dans la direction du virage, telles que K3 et éventuellement K2, sont survoltées pour mieux éclairer le virage, en particulier proportionnellement à l'amplitude du virage. L'unité U peut commander une progression du survoltage partant d'une seconde source moins inclinée, telle que K2, vers la seconde source K3 la plus inclinée.

Le schéma électrique d'alimentation est conventionnel pour une association code et feu de virage fixe. Selon la seconde configuration, seules les valeurs de courant sont plus importantes que pour une alimentation conventionnelle, par exemple 700 mA au lieu de 350 mA pour les diodes électroluminescentes actuellement disponibles.

Le fonctionnement du projecteur résulte des explications qui précèdent. Lorsque le projecteur est allumé et que le véhicule circule en ligne droite, les sources S1, S2, S3 sont alimentées. Certaines des secondes sources K1-K3 sont maintenues éteintes et leur allumage n'est commandé que lors d'un virage du côté de ces secondes sources.

Selon une autre possibilité, les sources K1-K3 sont allumées en même temps que les sources S1-S3. Lors d'un virage, les sources K1, K2, K3 sont survoltées avec éventuellement une progression partant du module K1 le moins incliné sur l'axe longitudinal du véhicule vers le module le plus incliné K3. Les modules orientés vers l'extérieur du virage peuvent être sous voltées, l'objectif étant de maintenir la température du système de refroidissement de la diode à un niveau moyen nominal correspondant aux caractéristiques préconisées.

L'augmentation de l'intensité lumineuse des sources K1 à K3 peut être progressive de manière à créer une impression de défilement du faisceau lumineux et de suivi du virage. En particulier, les sources K1 à K3 peuvent être allumées successivement.

L'invention permet une intégration optimisée, avec un gain de place. Une sensation d'effet dynamique peut être produite en contrôlant les modules individuellement en fonction de l'amplitude du signal d'angle du volant. Il est possible d'obtenir une fonction feu de virage fixe avec le même nombre de sources lumineuses, notamment de LEDs, qu'un faisceau code normal, ou avec un accroissement limité de ce nombre.

## Revendications

1. Projecteur lumineux code et virage pour véhicule automobile,
**caractérisé en ce qu'**il comporte :
- au moins deux sources lumineuses (S1, K1) avec au moins une première source (S1) à coupure, de type code, et au moins une seconde source (K1) à coupure au moins partiellement plate, disposée à l'extérieur de la première source, pour éclairer vers l'intérieur d'un virage de son côté :
- des moyens (E) sensibles à la trajectoire du véhicule pour fournir un signal dépendant de la nature de la route suivie par le véhicule ;
- et des moyens (U) pour augmenter l'intensité lumineuse de la source ou d'au moins une des sources à coupure au moins partiellement plate (K1), lors d'un virage du côté de cette (ces) source(s), en réponse au signal fourni;
**en ce que** les sources lumineuses (S1-S3, K1-K3) sont constituées par des modules (1) à diode(s) électroluminescente (s) (2), et **en ce que** lors de l'allumage du projecteur, la ou les premières sources (S1, S2.S3) et la ou les secondes sources (K1, K2, K3) sont alimentées en permanence et que, lors d'un virage, l'augmentation de l'intensité lumineuse de la ou des secondes sources est obtenue en survoltant ces sources.

2. Projecteur selon la revendication 1, **caractérisé en ce que** la ou les première(s) source (S1) est à coupure code, en forme de V ou présentant un décrochement .

3. Projecteur selon l'une des revendications précédentes, **caractérisé en ce que** la ou les secondes sources (K1) sont à coupure entièrement plate ou plate jusqu'à un certain angle horizontal.

4. Projecteur selon l'une des revendications précédentes, **caractérisé en ce que** la ou les premières sources (S1) d'une part et la ou les secondes sources (K1) d'autre part ont des coupures différentes.

5. Projecteur selon l'une des revendications précédentes, **caractérisé en ce que** plusieurs premières sources (S1, S2, S3) sont prévues avec leurs axes optiques parallèles et **en ce que** plusieurs secondes sources (K1, K2, K3) sont prévues avec leurs axes optiques inclinés vers l'extérieur par rapport à l'axe longitudinal du véhicule.

6. Projecteur selon l'une des revendications précédentes, **caractérisé en ce que** trois premières sources (S1, S2, S3) et trois secondes sources (K1, K2, K3) sont prévues.

7. Projecteur selon l'une des revendications précédentes, **caractérisé en ce que** l'inclinaison des axes des secondes sources (K1, K2, K3) est croissante vers l'extérieur.

8. Projecteur selon l'une des revendications précedentes, **caractérisé en ce qu'**une progression du survoltage est prévue en partant de la seconde source la moins inclinée (K1) vers la seconde source (K3) la plus inclinée.

9. Projecteur selon, la revendication 8, **caractérisé en ce que** les sources lumineuses orientées vers l'extérieur du virage sont sous voltées, en vue de maintenir la température du système de refroidissement des sources à un niveau moyen nominal.

10. Projecteur selon l'une des revendications précédentes, **caractérisé en ce que**, lors de l'allumage du projecteur, certaines des secondes sources (K1) seulement, à savoir les plus proches des premières sources (S1), sont alimentées en permanence, tandis que les secondes sources extrêmes (K2, K3) ne sont allumées que pendant les phases virage.

11. Véhicule automobile équipé d'au moins un projecteur selon l'une au moins des revendications précédentes.

## Claims

1. Low-beam and bending-beam headlight for a motor vehicle, **characterised in that** it comprises:
- at least two light sources (S1, K1), with a least one first source (S1) having a cut-off of the low-beam type, and at least one second source (K1) having a cut-off which is at least partly flat, the second source being disposed to the exterior of the first source, in order to illuminate towards the inside of a bend on its own side:
- means (E) responsive to the path of the vehicle in order to provide a signal which is dependent on the nature of the road followed by the vehicle;
- and means (U) for increasing the light intensity of the source, or of at least one of the sources having a cut-off that is at least partly flat (K1), while a bend is being negotiated on the side of this/ these source(s), in response to the signal provided, **in that** the light sources (S1- S3, K1 - K3) consist of modules (1) having a light-emitting diode/ diodes (2), and **in that** when the headlight is lit, the first source(s) (S1, S2, S3) and the second source(s) (K1, K2, K3) are permanently supplied with power, and **in that**, when a bend is being negotiated, the increase in the light intensity from the second source(s) is obtained by application of an over-voltage to these sources.

2. Headlight according to claim 1, **characterised in that** the cut-off of the first source(s) (S1) is/are of the low-beam type, and is V-shaped, or includes a set-back.

3. Headlight according to either of the preceding claims, **characterised in that** that cut-off of the second source(s) (K1) is entirely flat, or is flat up to a particular horizontal angle.

4. Headlight according to one of the preceding claims, **characterised in that** the first source(s) (S1) on the one hand, and the second source(s) (K1) on the other hand, have cut-offs different from each other.

5. Headlight according to one of the preceding claims, **characterised in that** a plurality of first sources (S1, S2, S3) are arranged with their optical axes parallel to each other, and **in that** a plurality of second sources (K1, K2, K3) are arranged with their optical axes inclined towards the exterior with respect to the longitudinal axis of the vehicle.

6. Headlight according to one of the preceding claims, **characterised in that** three first sources (S1, S2, S3) and three second sources (K1, K2, K3) are provided.

7. Headlight according to one of the preceding claims, **characterised in that** the inclination of the axes of the second sources (K1, K2, K3) increases towards the exterior.

8. Headlight according to one of the preceding claims, **characterised in that** the over-voltage is applied in progression starting from the second source (K1) which is inclined by the least amount, towards the second source (K3) having the greatest inclination.

9. Headlight according to claim 8, **characterised in that** the light sources which are oriented towards the outside of the bend are subject to under-voltage, in order to maintain the temperature of the cooling system of the sources at a nominal mean level.

10. Headlight according to one of the preceding claims, **characterised in that**, when the headlight is lit, only some of the second sources (K1), namely those which are closest to the first sources (S1), are permanently supplied with power, while the endmost second sources (K2, K3) are lit only during the bending-light phases.

11. Motor vehicle equipped with at least one headlight according to at least one of the preceding claims.

## Patentansprüche

1. Abblendlicht- und Kurvenlichtscheinwerfer für Kraftfahrzeuge,
**dadurch gekennzeichnet, dass** er umfasst:
- wenigstens zwei Lichtquellen (S1, K1) mit wenigstens einer ersten Lichtquelle (S1) mit Hell-Dunkel-Grenze für Abblendlicht, und wenigstens einer zweiten Lichtquelle (K1) mit wenigstens zum Teil flacher Hell-Dunkel-Grenze, die außerhalb der ersten Lichtquelle angeordnet ist, um eine auf ihrer Seite gelegene Kurve innen zu beleuchten;
- Mittel (E), die auf den Weg des Fahrzeugs reagieren, um ein Signal zu liefern, das von der Art der vom Fahrzeug befahrenen Straße abhängt;
- und Mittel (U) zum Erhöhen der Lichtstärke der Lichtquelle oder wenigstens einer der Lichtquellen mit wenigstens zum Teil flacher Hell-Dunkel-Grenze (K1) in einer Kurve auf der Seite dieser Lichtquelle(n) als Reaktion auf das gelieferte Signal,
und dass die Lichtquellen (S1-S3, K1-K3) durch Module (1) mit Leuchtdiode(n) (2) gebildet sind, und dass beim Einschalten der Scheinwerfer die erste(n) Lichtquelle(n) (S1, S2, S3) und die zweite(n) Lichtquelle(n) (K1, K2, K3) ständig gespeist werden, und dass in einer Kurve die Zunahme der Lichtstärke der zweiten Lichtquelle(n) durch Betreiben dieser Lichtquellen mit Überspannung erzielt wird.

2. Scheinwerfer nach Anspruch 1,
**dadurch gekennzeichnet, dass** die erste(n) Lichtquelle(n) (S1) eine Hell-Dunkel-Grenze für Abblendlicht in V-Form oder mit einer Stufe aufweist bzw. aufweisen.

3. Scheinwerfer nach einem der vorhergehenden Ansprüche,
**dadurch gekennzeichnet, dass** die zweite(n) Lichtquelle(n) (K1) eine Hell-Dunkel-Grenze aufweisen, die vollkommen flach oder bis zu einem bestimmten Horizontalwinkel flach ist.

4. Scheinwerfer nach einem der vorhergehenden Ansprüche,
**dadurch gekennzeichnet, dass** die erste(n) Lichtquelle(n) (S1) einerseits und die zweite(n) Lichtquelle(n) (K1) andererseits unterschiedliche Hell-Dunkel-Grenzen haben.

5. Scheinwerfer nach einem der vorhergehenden Ansprüche,
**dadurch gekennzeichnet, dass** mehrere erste Lichtquellen (S1, S2, S3) mit zueinander parallelen optischen Achsen vorgesehen sind, und dass mehrere zweite Lichtquellen (K1, K2, K3) mit bezogen auf die Fahrzeuglängsachse nach außen geneigten optischen Achsen vorgesehen sind.

6. Scheinwerfer nach einem der vorhergehenden Ansprüche,
**dadurch gekennzeichnet, dass** drei erste Lichtquellen (S1, S2, S3) und drei zweite Lichtquellen (K1, K2, K3) vorgesehen sind.

7. Scheinwerfer nach einem der vorhergehenden Ansprüche,
**dadurch gekennzeichnet, dass** die Neigung der Achsen der zweiten Lichtquellen (K1, K2, K3) nach außen zunimmt.

8. Scheinwerfer nach einem der vorhergehenden Ansprüche,
**dadurch gekennzeichnet, dass** eine Zunahme der Überspannung ausgehend von der zweiten Lichtquelle (K1) mit der geringsten Neigung zur zweiten Lichtquelle (K3) mit der stärksten Neigung vorgesehen ist.

9. Scheinwerfer nach Anspruch 8,
**dadurch gekennzeichnet, dass** die zur Außenseite der Kurve gerichteten Lichtquellen mit Unterspannung betrieben werden, um die Temperatur des Kühlsystems der Lichtquellen auf einem mittleren Nominalniveau zu halten.

10. Scheinwerfer nach einem der vorhergehenden Ansprüche,
**dadurch gekennzeichnet, dass** beim Einschalten des Scheinwerfers nur manche der zweiten Lichtquellen (K1), nämlich die den ersten Lichtquellen (S1) nächstgelegenen, ständig gespeist werden, während die äußeren zweiten Lichtquellen (K2, K3) nur während der Kurvenphasen eingeschaltet sind.

11. Kraftfahrzeug, ausgestattet mit wenigstens einem Scheinwerfer nach einem der vorhergehenden Ansprüche.
